**Europäisches Patentamt**

**European Patent Office**

**Office européen des brevets**

(19)

(11) Veröffentlichungsnummer: **0 064 622**
**A1**

(12) **EUROPÄISCHE PATENTANMELDUNG**

(21) Anmeldenummer: **82103298.4**

(22) Anmeldetag: **20.04.82**

(51) Int. Cl.³: **H 02 P 5/40**
**G 01 R 25/00**

(30) Priorität: **29.04.81 DE 3116976**

(43) Veröffentlichungstag der Anmeldung:
**17.11.82** Patentblatt **82/46**

(84) Benannte Vertragsstaaten:
**AT BE CH FR GB IT LI NL SE**

(71) Anmelder: **BROWN, BOVERI & CIE Aktiengesellschaft**
**Kallstadter Strasse 1**
**D-6800 Mannheim 31(DE)**

(72) Erfinder: **Kuhn, Werner, Dipl.-Ing.**
**Eichenstrasse 23**
**D-6944 Hemsbach(DE)**

(72) Erfinder: **Herbst, Herbert, Ing. grad.**
**Kellereistrasse 4**
**D-6800 Mannheim 31(DE)**

(74) Vertreter: **Kempe, Wolfgang, Dr. et al,**
**c/o Brown, Boveri & Cie AG Postfach 351**
**D-6800 Mannheim 1(DE)**

(54) **Schaltungsanordnung zur Bildung der Phasenlage eines Ständerspannungsvektors bzw. eines Ständerstromvektors für eine umrichtergespeiste Asynchronmaschine.**

(57) Zur Bildung der Phasenlage $\varphi_1$ des Ständerspannungsvektors bzw. des Ständerstromvektors zur Steuerung einer über einen dreiphasigen Umrichter (13) gespeisten Asynchronmaschine (14) werden der aus der drehmomentabhängigen Schlupffrequenz $f_2$ mittels eines Integrators (16) gewonnene Winkelwert $\varphi_2$, der aus der Läufer-Drehfrequenz $f_n$ mittels eines Integrators (18) gewonnene Winkelwert $\varphi_n$ sowie der drehmomentabhängige Lastwinkel $\Delta\varphi$ addiert. Die Summe $\varphi_1 = \varphi_2 + \varphi_n + \Delta\varphi$ wird Sinusfunktionsgebern (7, 8, 9) zur Erzeugung eines dreiphasigen Drehsystems zugeführt. Die Ausgangssignale der Sinusfunktionsgeber (7, 8, 9) werden in Multiplizierern (10, 11, 12) mit einem drehmomentabhängigen Amplitudenwert der Ständerspannung ($|U|$) bzw. des Ständerstromes ($|I|$) multipliziert und dem Umrichter (13) als Sollwert der Augenblickswerte von Ständerspannung bzw. Ständerstrom zugeführt.

./...

EP 0 064 622 A1

Fig. 2

BROWN, BOVERI & CIE AKTIENGESELLSCHAFT
Mannheim
Mp.-Nr. 541/81

24. April 1981
ZPT/P3-Pn/Bt

Schaltungsanordnung zur Bildung der Phasenlage eines
Ständerspannungsvektors bzw. eines Ständerstromvektors für
eine umrichtergespeiste Asynchronmaschine.

Die Erfindung bezieht sich auf eine Schaltungsanordnung zur
Bildung der Phasenlage des Ständerspannungsvektors bzw.
des Ständerstromvektors zur Steuerung einer über einen dreiphasigen Umrichter gespeisten Asynchronmaschine mit Drehzahlerfassungseinrichtung, wobei die Phasenlage $\varphi_1$ des
Ständerspannungs- bzw. des Ständerstromsystems gebildet und
Sinusfunktionsgebern zur Erzeugung eines dreiphasigen
Drehsystems zugeführt wird, die Ausgangssignale der Sinusfunktionsgeber mit einem drehmomentabhängigen Amplitudenwert der Ständerspannung bzw. des Ständerstromes multipliziert und dem Umrichter als Sollwerte der Augenblickswerte
von Ständerstrom- bzw. Ständerspannung zugeführt werden und
wobei die Schlupffrequenz $f_2$ und der Lastwinkel $\Delta\varphi$ in Abhängigkeit des Drehmomentes vorgegeben werden.

Aus der DE-OS 24 52 833 ist ein Verfahren zur Steuerung des von einer Asynchronmaschine abgegebenen Drehmomentes bekannt, bei dem die Asynchronmaschine von einer mehrphasigen Spannungsquelle mit einstellbarer Frequenz und Amplitude gespeist wird und wobei die Amplitude der Motorspannung als Funktion der Drehzahl und die Schlupffrequenz als Stellgröße für das Drehmoment vorgegeben werden. Es sind Steuerungsmittel vorgesehen, welche aus der als Führungsgröße vorgegebenen Schlupffrequenz $f_2$ und der aus der mechanischen Drehzahl ermittelten Läufer-Drehfrequenz $f_n$ mit Hilfe von in den Steuerungsmitteln voreingestellten Kenngrößen der Asynchronmaschine diejenige Amplitude, Phasenlage und Frequenz $f_1$ der Motorspannung als Stellgröße für das Speisespannungssystem berechnen, welche bewirken, daß bei schnellen Änderungen der vorgegebenen Schlupffrequenz $f_2$ sich Amplitude und Phasenlage des Läuferflusses der Asynchronmaschine nicht oder nur wenigt ändern, die Frequenz des Läuferflusses gegenüber dem Läufer aber gleich der vorgegebenen Schlupffrequenz $f_2$ ist.

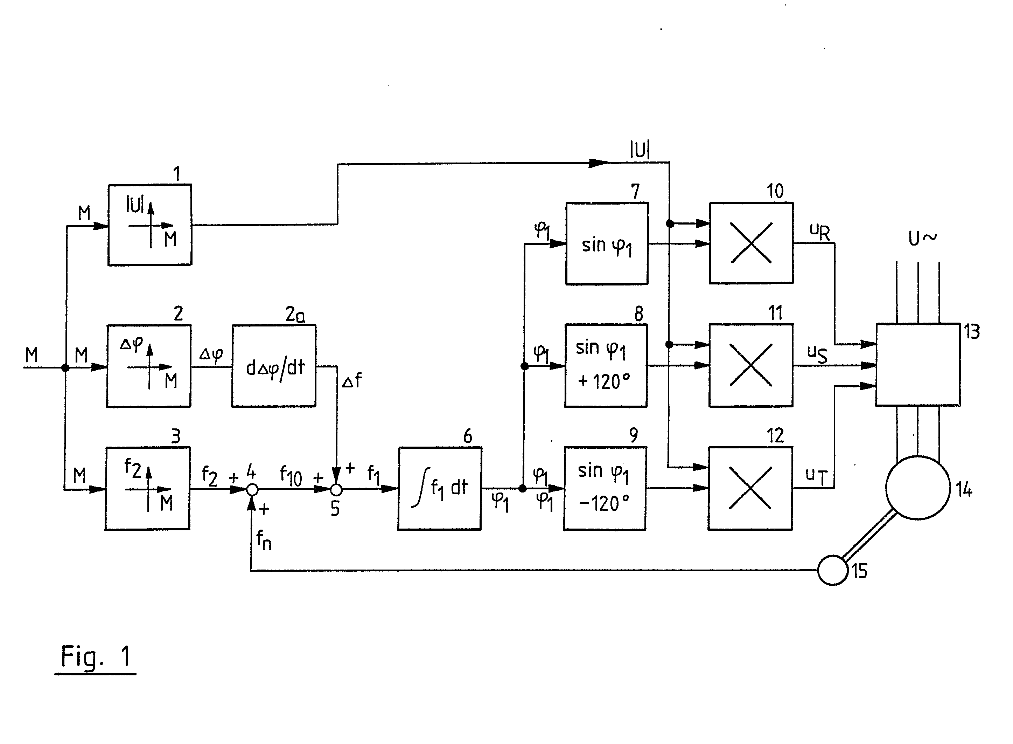

Zur Bildung des Ständerspannungsvektors wird dabei die in Fig. 1 dargestellte Schaltungsanordnung verwendet. Das Drehmoment M wird drei Funktionsgebern 1, 2 und 3 zugeführt. Der Funktionsgeber 1 gibt ausgangsseitig die Amplitude der Ständerspannung $|U|$ in Abhängigkeit des Drehmomentes M ab. Der Funktionsgeber 2 liefert ausgangsseitig einen Lastwinkel $\Delta\Psi$ in Abhängigkeit des Drehmomentes M. Der Funktionsgeber 3 gibt ausgangsseitig eine Schlupffrequenz $f_2$ in Abhängigkeit des Drehmomentes M ab. Schlupffrequenz $f_2$ und Läufer-Drehfrequenz $f_n$ werden in einer Additionsstelle 4 addiert und die Summe $f_{10} = f_2 + f_n$ wird einer Additionsstelle 5 zugeleitet. Aus der Lastwinkelvergabe $\Delta\Psi$ des Funktionsgebers 2 bildet ein Differenzierer 2a eine Impulsreihe $\Delta f$. In der Additionsstelle 5 werden die Signale $f_{10}$ und $\Delta f$ addiert und als Summe wird die Ständerfrequenz $f_1$ gewonnen und einem Integrator 6 zugeführt. Der Integrator 6 bildet das Inte-

gral $\Psi_1 = \int f_{1dt}$ und führt es drei Funktionsgebern 7, 8, 9 zu. Der Funktionsgeber 7 bildet das Ausgangssignal $\sin \Psi_1$ und leitet es einem Multiplikator 10 zu. Der Funktionsgeber 8 bildet das Signal $\sin(\Psi_1 + 120^{\circ})$ und führt es einem Multiplikator 11 zu. Der Funktionsgeber 9 bildet das Signal $\sin(\Psi_1 - 120^{\circ})$ und leitet es einem Multiplikator 12 zu. Den Multiplikatoren 10, 11, 12 wird eingangsseitig desweiteren die Amplitude der Ständerspannung $|U|$ zugeleitet. Ausgangsseitig können den Multiplikatoren 10, 11, 12 die Sollwerte $u_R$, $u_S$, $u_T$ der Augenblickswerte der Ständerspannung entnommen und einem Umrichter 13 zugeführt werden. Der Umrichter 13 wandelt die dreiphasige Wechselspannung $U_\sim$ in eine dreiphasige Wechselspannung anderer Frequenz und Spannung zur Speisung einer Asynchronmaschine 14 um. Die Asynchronmaschine 14 ist mit einer Drehzahlerfassungseinrichtung 15 zur Ermittlung der Läufer-Drehfrequenz $f_n$ verbunden.

Diese bekannte Schaltungsanordnung hat den Nachteil, daß die Schlupffrequenz $f_2$, die Läufer-Drehfrequenz $f_n$ sowie die Frequenz $\Delta f$ aus Gründen der Genauigkeit als Impulsreihen dargestellt werden müssen. Impulsreihen-Additionen sind jedoch sehr aufwendig, da die asynchronen Impulsreihen vor Addition synchronisiert werden müssen. Es ergibt sich daher ein erhöhter Aufwand an logischen Schaltungen.

Der Erfindung liegt davon ausgehend die Aufgabe zugrunde, eine Schaltungsanordnung anzugeben, die die Bildung der Phasenlage des Ständerspannungsvektors bzw. des Ständerstromvektors auf einfache Art ermöglicht.

Diese Aufgabe wird erfindungsgemäß dadurch gelöst, daß die Schlupffrequenz $f_2$ einem ersten Integrator zugeführt wird, der ausgangsseitig das Signal $\Psi_2$ an eine Additionsstelle abgibt, daß die Läuferdrehfrequenz $f_n$ einem zweiten Integrator zugeführt wird, der ausgangsseitig das Signal $\Psi_n$ an die Additionsstelle abgibt, daß der Lastwinkel $\Delta \Psi$ der

541/81 — 4 — 24. 04. 1981

0064622

Additionsstelle zugeführt wird und daß mittels der Additionsstelle die Phasenlage des Ständerspannungs- bzw. Ständerstromsystems $\Psi_1 = \Psi_2 + \Delta\Psi$ gebildet wird.

Die mit der Erfindung erzielbaren Vorteile liegen insbesondere darin, daß lediglich Winkelwerte und nicht Impulsreihen addiert werden müssen. Die Winkelwerte müssen nicht wie Impulsreihen vor jeder Addition bzw. Subtraktion synchronisiert werden, der Logikaufwand wird daher reduziert. Die Schaltungsanordnung ist vorteilhaft in einem Mikroprozessor realisierbar.

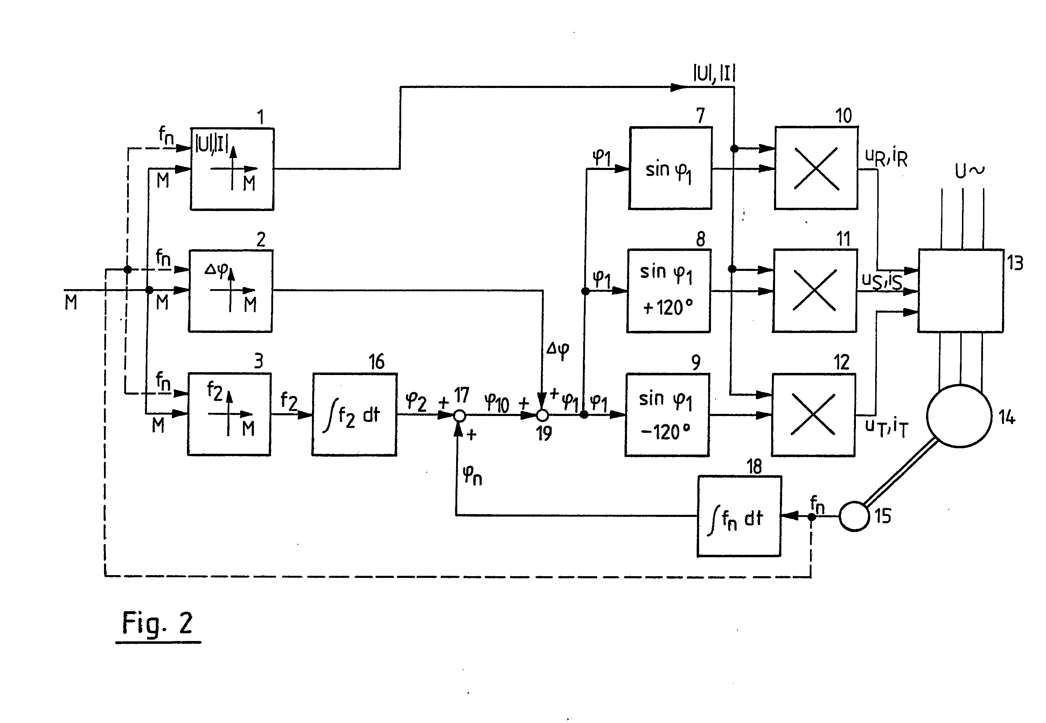

Ein Ausführungsbeispiel der Erfindung ist nachfolgend anhand der Figuren 2, 3 und 4 erläutert.

In Fig. 2 ist die erfindungsgemäße Schaltungsanordnung zur Bildung der Phasenlage des Ständerstromvektors dargestellt. Das Drehmoment M wird drei Funktionsgebern 1, 2, 3 zugeführt. Der Funktionsgeber 1 gibt ausgangsseitig eine Amplitude $|I|$ des Ständerstromes in Abhängigkeit des eingangsseitig anstehenden Drehmomentwertes M vor. Der Funktionsgeber 2 liefert ausgangsseitig einen Lastwinkel $\Delta\Psi$ in Abhängigkeit des vorgegebenen Drehmomentes M. Der Funktionsgeber 3 gibt die Schlupffrequenz $f_2$ in Abhängigkeit des Drehmomentes M vor. Die Schlupffrequenz $f_2$ wird einem Integrator 16 zugeführt, der das Signal $\Psi_2 = \int f_2 dt$ bildet und einer Additionsstelle 17 zuführt. Die Additionsstelle 17 summiert die Signale $\Psi_2$ und $\Psi_n$ und leitet die Summe $\Psi_{10} = \Psi_2 + \Psi_n$ einer Additionsstelle 19 zu. Die Additionsstelle 19 bildet die Phasenlage des Ständerstromsystems $\Psi_1 = \Psi_{10} + \Delta\Psi$.

Das Signal $\Psi_1$ wird drei Funktionsgebern 7, 8, 9 zugeleitet. Der Funktionsgeber 7 bildet das Ausgangssignal $\sin\Psi_1$ und leitet es einem Multiplikator 10 zu. Der Funktionsgeber 8 bildet das Ausgangssignal $\sin(\Psi_1 + 120^\circ)$ und führt es einem Multiplikator 11 zu. Der Funktionsgeber 9 bildet das Ausgangssignal $\sin(\dot{\Psi}_1 - 120^\circ)$ und leitet es einem Multiplikator 12 zu. Den Multiplikatoren 10, 11, 12 liegt eingangsseitig als zweiter Faktor die Amplitude des Ständerstromes $|I|$ an. Ausgangsseitig geben die Multiplikatoren 10, 11, 12 die Sollwerte $i_R$. $i_S$, $i_T$ der Augenblickswerte des Ständerstromes an einen Umrichter 13 ab.

Der Umrichter 13 wandelt die ihm eingangsseitig zugeführte dreiphasige Wechselspannung $U_\sim$ mit Hilfe einer Stromregelung in eine dreiphasige Wechselspannung anderer Frequenz und Spannung so um, daß in der Asynchronmaschine 14 der vorgegebene Strom fließt. An die Asynchronmaschine 14 ist eine Drehzahlerfassungseinrichtung 15 zur Erfassung der Läuferdrehfrequenz $f_n$ angeschlossen. Die Drehfrequenz $f_n$ wird einem Integrator 18 zugeführt, der sein Ausgangssignal $\Psi_n = \int f_n dt$ an die Additionsstelle 17 abgibt.

Bei der Vorgabe eines Spannungssystems sind die Funktionsgeber für die Amplitude $|U|$, den Lastwinkel $\Delta\dot{\Psi}$ und die Schlupffrequenz $f_2$ zweidimensional. Die Werte sind sowohl von dem Momentensollwert M als auch von der Drehzahl n abhängig. Die Multiplikatoren 10, 11, 12 geben dann die Sollwerte der Augenblickswerte der Ständerspannung $u_R$, $u_S$, $u_T$ an den Umrichter 13 ab.

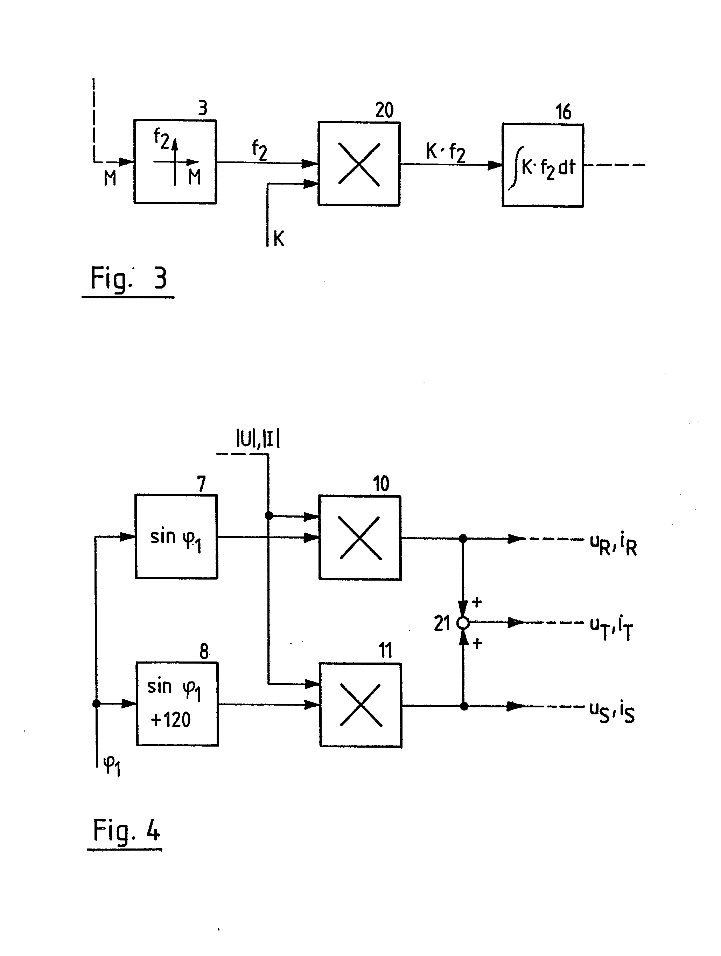

In Fig. 3 ist gemäß einer Ausgestaltung der Erfindung ein Multiplikator 20 zwischen dem Funktionsgeber 3 und dem Integrator 16 vorgesehen. Dem Multiplikator 20 liegen als Faktoren die Schlupffrequenz $f_2$ und ein Temperatur-Kompensationsfaktor K an. Dem Integrator 16 wird die mit dem Faktor K bewertete Schlupffrequenz K . $f_2$ zugeleitet. Dadurch wird die Abhängigkeit der Schlupffrequenz $f_2$ von der Läufertemperatur berücksichtigt.

**0064622**

In Fig. 4 ist dargestellt, wie die Sollwerte der Augenblickswerte der Ständerspannung bzw. des Ständerstromes $u_R$, $u_S$, $u_T$ bzw. $i_R$, $i_S$, $i_T$ mit nur zwei Funktionsgebern 7, 8 und zwei nachgeschalteten Multiplikatoren 10, 11 bestimmt werden können. Die den Multiplikatoren 10, 11 entnommenen Werte $u_R$, $u_S$ bzw. $i_R$, $i_S$ werden einer Additionsstelle 21 zugeführt, die ausgangsseitig die Summe $u_T = u_R + u_S$ bzw. $i_T = i_R + i_S$ abgibt. Funktionsgeber 9 und Multiplikator 11 entfallen dabei vorteilhaft.

Ansprüche

1. Schaltungsanordnung zur Bildung der Phasenlage des Ständerspannungsvektors bzw. des Ständerstromvektors zur Steuerung einer über einen dreiphasigen Umrichter gespeisten Asynchronmaschine mit Drehzahlerfassungseinrichtung, wobei die Phasenlage $\varphi_1$ des Ständerspannungs- bzw. des Ständerstromsystems gebildet und Sinusfunktionsgebern zur Erzeugung eines dreiphasigen Drehsystems zugeführt wird, die Ausgangssignale der Sinusfunktionsgeber mit einem drehmomentabhängigen Amplitudenwert der Ständerspannung bzw. des Ständerstromes multipliziert und dem Umrichter als Sollwerte der Augenblickswerte von Ständerstrom bzw. Ständerspannung zugeführt werden und wobei die Schlupffrequenz $f_2$ und der Lastwinkel $\Delta\varphi$ in Abhängigkeit des Drehmomentes vorgegeben wird, <u>dadurch ge-kennzeichnet</u>, daß die Schlupffrequenz $f_2$ einem Integrator (16) zugeführt wird, der ausgangsseitig das Signal $\varphi_2$ an eine Additionsstelle (17, 19) abgibt, daß die Läufer-Drehfrequenz $f_n$ einem zweiten Integrator (18) zugeführt wird, der ausgangsseitig das Signal $\varphi_n$ an die Additionsstelle (17, 19) abgibt, daß der Lastwinkel $\Delta\varphi$ der Additionsstelle (17, 19) zugeführt wird und daß mittels der Additionsstelle (17, 19) die Phasenlage des Ständerspannungs- bzw. Ständerstromsystems $\varphi_1 = \varphi_2 + \varphi_n + \Delta\varphi$ gebildet wird.

2. Schaltungsanordnung nach Anspruch 1, dadurch gekennzeichnet, daß die Schlupffrequenz $f_2$ mit einem von der Läufertemperatur abhängigen Temperatur-Kompensationsfaktor (K) bewertet wird.

3. Schaltungsanordnung nach wenigstens einem der vorstehenden Ansprüche, gekennzeichnet durch eine Realisierung in einem Mikroprozessor.

0064622

Fig. 1

Fig. 2

0064622

Fig. 3

Fig. 4

Europäisches
Patentamt

**EUROPÄISCHER RECHERCHENBERICHT**

EP 82 10 3298.4

## EINSCHLÄGIGE DOKUMENTE

KLASSIFIKATION DER
ANMELDUNG (Int. Cl.³)

| Kategorie | Kennzeichnung des Dokuments mit Angabe, soweit erforderlich, der maßgeblichen Teile | betrifft Anspruch |
|---|---|---|
| A,D | DE - A1 - 2 452 833 (BROWN, BOVERI & CIE) <br> * Seite 10, Absatz 3 bis Seite 11, Absatz 2; Fig. 2 <br> Seite 11, Absatz 3 bis Seite 12, Absatz 2 * <br> -- | 1 <br><br> 2 |
| A | IEEE TRANSACTIONS ON INDUSTRIAL ELECTRONICS AND CONTROL INSTRUMENTA-TION, Band IECI-28, Nr. 1, Februar 1981, New York <br> P.C. SEN et al. "Microprocessor Control of an Induction Motor with Flux Regulation" <br> Seiten 17 bis 21 <br> * Zusammenfassung; Seite 17 * <br> ---- | <br><br><br><br><br><br> 3 |

H 02 P 5/40
G 01 R 25/00

RECHERCHIERTE
SACHGEBIETE (Int. Cl.³)

G 01 R 25/00
H 02 P 5/28
H 02 P 5/34
H 02 P 5/40
H 02 P 7/42

KATEGORIE DER
GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde lie-gende Theorien oder Grund-sätze
E: älteres Patentdokument, das jedoch erst am oder nach dem Anmeldedatum veröffentlicht worden ist
D: in der Anmeldung angeführtes Dokument
L: aus andern Gründen ange-führtes Dokument

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 23-07-1982 | LEMMERICH |